# EUROPEAN PATENT SPECIFICATION

(11) **EP 1 553 297 B1**
(45) Date of publication and mention of the grant of the patent: **29.08.2007**
(21) Application number: 04029485.2
(22) Date of filing: 13.12.2004
(51) Int. Cl.: F04B 53/10, F16K 15/14, F04B 43/04

(54) **Check valve and pump including the same**
Rückschlagventil und Pumpe mit einem solchen Ventil
Valve non-retour et pompe comprennant cette valve

(30) Priority: 15.12.2003 JP 2003416949
(43) Date of publication of application: 13.07.2005
(73) Proprietor: ALPS ELECTRIC CO., LTD., Tokyo 145-8501 (JP)
(72) Inventor: Onishi, Hitoshi, Ota-ku Tokyo 145-8501 (JP)
(74) Representative: Klunker . Schmitt-Nilson . Hirsch

(56) References cited:
- DE-B1- 1 767 306
- US-A- 5 205 819
- US-A- 5 803 122
- US-A- 6 048 183
- PATENT ABSTRACTS OF JAPAN vol. 008, no. 140 (M-305), 29 June 1984 (1984-06-29) -& JP 59 037284 A (HITACHI SEISAKUSHO KK), 29 February 1984 (1984-02-29)

## Description

### BACKGROUND OF THE INVENTION

### 1. Field of the Invention

The present invention relates to a check valve according to the preamble of claim 1.

### 2. Description of the Related Art

As disclosed in Japanese Unexamined Patent Application Publication No. 2000-274374, an umbrella valve having an umbrella-shaped component and a shaft corresponding to a handle of the umbrella disposed in the center of the umbrella-shaped component is well-known as a small-sized check valve. The umbrella-shaped component is disposed on one of two surfaces, i.e. a sealing surface, of a partition so as to cover a hole bored through the partition. The shaft is supported by the partition such that the umbrella-shaped component is deformably brought into contact with the sealing surface. Thus, the umbrella valve functions as a check valve. More specifically, the umbrella valve allows a stream applying a fluid pressure to the inner side of the umbrella-shaped component to flow through the hole by deforming the umbrella-shaped component, while the umbrella valve blocks a stream applying a fluid pressure to the outer side of the umbrella-shaped component.

However, as a result of investigation, the present inventors found that this umbrella valve can have sufficient sealing characteristics only when the sealing surface is sufficiently flat and the sealing surface is in contact with the inner side of the umbrella-shaped component at a uniform pressure. This problem is more remarkable as the umbrella valve is downsized.

Moreover, the umbrella valve is used as a check valve for a low-profiled device, for example, a piezoelectric pump. Since the piezoelectric pump is often used for a water-cooled notebook computer, the piezoelectric pump should be ultrathin, and there has been a demand for thinner umbrella valves. Other types of check valves disclosed in Japanese Unexamined Patent Application Publication Nos. 9-250461, 9-329271, and 2003-90447 have the same problem as the above-described check valve.

A prior art check valve of the above identified type is known from US-A-5,803,122. This check valve comprises a valve component having a seal which is made of a thin elastic part having a constant thickness. A portion of the bottom surface of this part of the valve component is in contact with the circular edge of the partition.

JP-59.037284 A discloses a check valve component in which an annular protrusion is formed at the outer periphery of a disk shaped seal, said protrusion being directed to the upper surface of a partition. The tip of the annular protrusion comes in contact with the surface of the partition.

### SUMMARY OF THE INVENTION

Accordingly, it is an object of the present invention to provide a compact, low-profiled umbrella-type check valve that includes a valve component composed of a single elastic body and that has excellent sealing characteristics.

The check valve according to the present invention includes the features of claim 1.

The seal of the valve component may be flat when the valve component is not attached to the partition. The rim of bottom surface of the seal that comes into contact with the circular edge is annually tapered and the thickness of the seal may be reduced toward the outer rim.

The check valve according to the present invention has excellent sealing characteristics regardless of the planarity of the seal since the bottom surface of seal of the valve component is in line contact with the circular edge defined by the level difference between the partition and the thin circular portion.

### BRIEF DESCRIPTION OF THE DRAWINGS

Fig. 1 is a longitudinal sectional view illustrating an example of a piezoelectric pump including check valves ;
Fig. 2 is a longitudinal sectional view illustrating a valve component of the check valve in a free state;
Fig. 3 is a longitudinal sectional view of the valve component shown in Fig. 2 attached to a partition while the check valve is closed;
Fig. 4 is a longitudinal sectional view of the above-described valve component while the check valve is open;
Fig. 5 is a partly sectioned perspective view of the check valve; and
Fig. 6 is a longitudinal sectional view illustrating the check valve according to the present invention.

### DESCRIPTION OF THE PREFERRED EMBODIMENTS

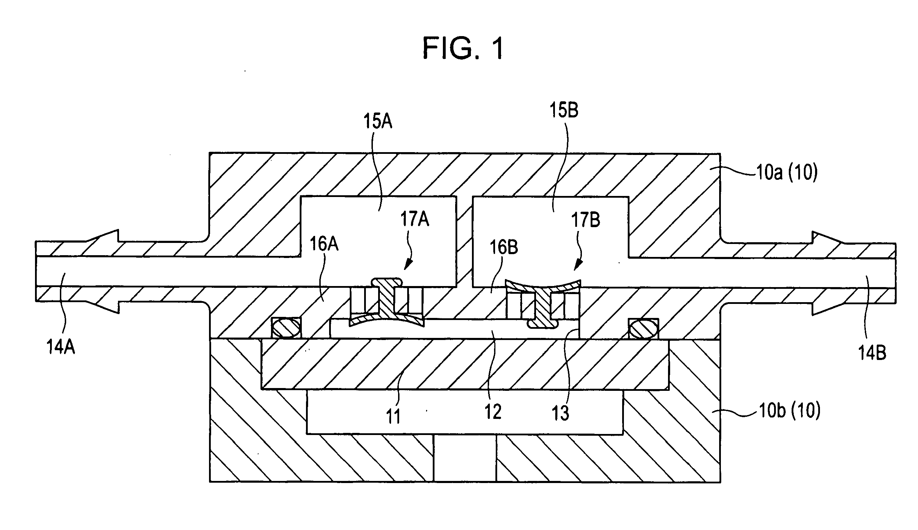

Fig. 1 shows an embodiment of a check valve that is used in a piezoelectric pump. A housing 10 includes an upper housing 10a and a lower housing 10b, and a piezoelectric vibrator 11 is hermetically clamped therebetween. The thickness of the piezoelectric vibrator 11 is exaggerated for purposes of illustration, and the actual thickness is less than 1.5 mm. The upper housing 10a has a hollow section 13, and a variable chamber 12 is formed between the hollow section 13 and the piezoelectric vibrator 11.

The upper housing 10a has an inlet 14A and an outlet 14B for liquid, i.e. cooling water. The inlet 14A communicates with an inlet reservoir 15A, whereas the outlet 14B communicates with an outlet reservoir 15B. A partition 16A is disposed between the inlet reservoir 15A and the variable chamber 12 and a partition 16B is disposed between the outlet reservoir 15B and the variable chamber 12. Check valves 17A and 17B are attached to the partitions 16A and 16B, respectively. The check valve 17A allows a stream from the inlet 14A (the inlet reservoir 15A), to the variable chamber 12, and blocks a stream in the opposite direction. On the other hand, the check valve 17B allows a stream from the variable chamber 12 to the outlet 14B (the outlet reservoir 15B), and blocks a stream in the opposite direction.

In the above-described piezoelectric pump, when the piezoelectric vibrator 11 deforms to expand the capacity of the variable chamber 12, the check valve 17A opens and the check valve 17B closes, and thus the liquid flows from the inlet 14A (inlet reservoir 15A) into the variable chamber 12. Alternately, when the piezoelectric vibrator 11 deforms to reduce the capacity of the variable chamber 12, the check valve 17B opens and the check valve 17A closes, and thus the liquid flows from the variable chamber 12 into the outlet 14B (outlet reservoir 15B). Accordingly, liquid can be pumped by alternately deforming, or vibrating, the piezoelectric vibrator 11. Such a piezoelectric vibrator is well known.

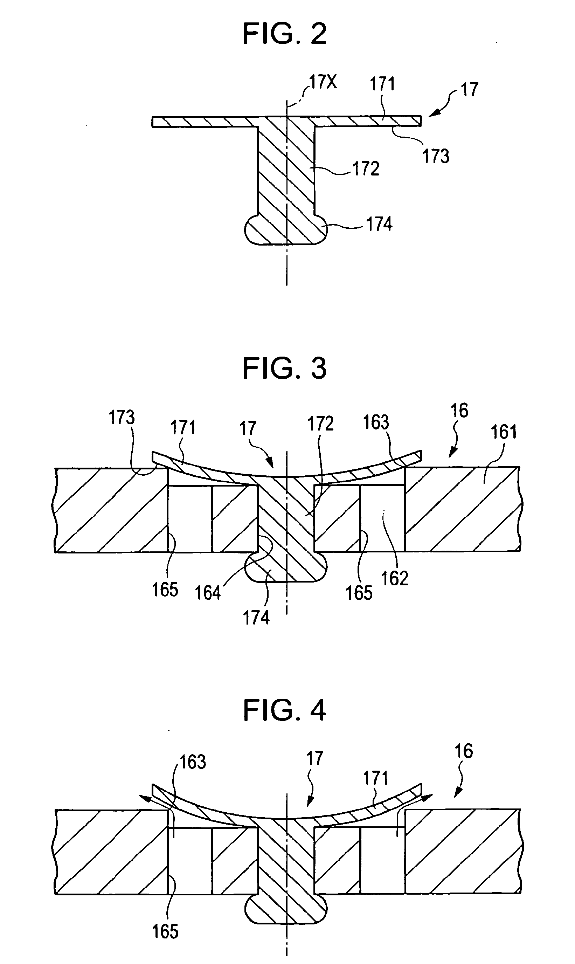

The structures of the check valves 17A and 17B are the same, and each include a valve component 17 and a partition 16. The valve component 17 and the partition 16 will now be described with reference to Figs. 2 to 5.

The valve component 17 shown in Fig. 2 is symmetrical with respect to an axis 17X. The valve component 17 is composed of a single elastic body, and includes a disk seal 171 and a shaft 172 extending orthogonally from the bottom center of the seal 171. The bottom surface 173 of the seal 171 is preferably flat in a free state, i.e. when the valve component 17 is not attached to the partition 16. The shaft 172 has a stop shoulder 174 at the tip thereof.

The partition 16 is substantially flat, and includes a flat (thick) portion 161 opposing the outer rim of the bottom surface of the seal 171 and a thin circular portion 162 formed in the flat portion 161. The level difference between the flat portion 161 and the thin circular portion 162 forms a circular edge 163.

A valve-supporting hole 164 that sustains the valve component 17 is formed at the center of the thin circular portion 162, and a plurality of vents 165 are formed around the valve-supporting hole 164. These vents 165 communicate with both the variable chamber 12 and the inlet reservoir 15A or outlet reservoir 15B shown in Fig. 1. The shaft 172 of the valve component 17 is fitted into the valve-supporting hole 164 of the partition 16, and is fixed thereto by the stop shoulder 174 that protrudes radially from the valve-supporting hole 164.

When the shaft 172 is fixed to the valve-supporting hole 164, and at least in a state where the seal 171 does not receive fluid pressure, the bottom surface of the seal 171 is in line contact with the circular edge 163 at a position adjacent to the outer rim of the seal 171. In other words, the bottom surface of the flat seal 171 is deformed to be in contact with the thin circular portion 162 at the boundary between the shaft 172 and the seal 171, and consequently, the bottom surface of the seal 171 comes into line contact with the circular edge 163 at a position adjacent to the outer rim of the seal 171, instead of surface contact with the flat portion 161. The position of the stop shoulder 174 of the shaft 172, i.e. the length of the valve-supporting hole 164, is determined such that the seal 171 is deformed as described above. The term "line contact" in this specification does not mean a geometric contact, but a contact of the bottom surface of the seal 171 and the circular edge 163 at the highest contact pressure that can achieve high sealing characteristics.

As shown in Fig. 3, when the pressure at the top surface of the seal 171 of the valve component 17 is high, the seal 171 is pressed against the circular edge 163 at a high contact pressure to close the fluid channel. As shown in Fig. 4, when the pressure at the bottom surface of the seal 171 is high, the seal 171 is separated from the circular edge 163 to open the fluid channel. In this manner, the above-described structure functions as a check valve. When the check valve is closed, the seal 171 of the valve component 17 is in line contact with the circular edge 163 of the partition 16. As a result, higher sealing characteristics can be achieved compared to a known umbrella valve whose seal is in surface contact with a flat portion. The planarity of the flat portion 161 has little effect on the sealing characteristics. Moreover, when the check valve is open, the fluid channel is smoother and the channel resistance is lower compared to the umbrella valve. In addition, the check valve can be low-profiled compared to the known umbrella valve having an umbrella-shaped valve component.

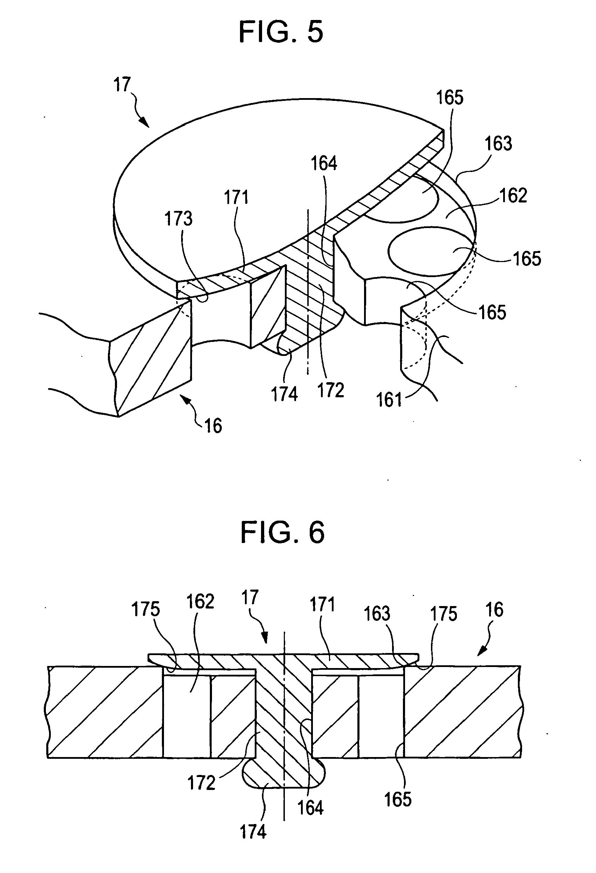

Fig. 6 illustrates the check valve according to the present invention. In this embodiment, an annularly tapered surface 175 is formed along the rim of the bottom surface of flat seal 171 of the valve component 17 by reducing the thickness of the seal 171 toward the outer rim to secure the line contact with the circular edge 163.

## Claims

1. A check valve (17A, 17B) comprising:
a valve component (17) composed of an elastic material and having a flat circular seal (171) and a shaft (172) extending from the center of the seal (171); and
a partition (16) having a valve-supporting hole (164) sustaining the valve component (17), a thin circular portion (162) centered at the valve-supporting hole (164) and having a diameter smaller than the seal (171), and vents (165) through the thin circular portion (162), wherein
the shaft (172) of the valve component (17) is sustained by the valve-supporting hole (164) in the partition (16); and valve-supporting hole in the partition; and
the seal (171) is deformed toward the partition (16) such that the bottom surface of the seal (171) is in line contact with a circular edge (163) that is defined by the level difference between the partition (16) and the thin circular portion (162) at least in a state where the valve component (17) does not receive fluid pressure, wherein
the seal (171) of the valve component (17) is flat when the valve component (17) is not attached to the partition (16); **characterized in that** the rim of bottom surface of the seal (171) is annularly tapered and the thickness of the seal (171) is reduced toward the outer rim, and that an annularly tapered surface (175) is in line contact with the circular edge (163).

2. The check valve (17A, 17B) according to Claim 1, wherein
the seal (171) of the valve component (17) is flat when the valve component (17) is not attached to the partition (16); and
the bottom surface of the seal (171) is in contact with the thin circular portion (163) at the boundary between the shaft (172) and the seal (171).

3. A pump comprising the check valve (17A, 17B) according to Claim 1 or 2.

## Patentansprüche

1. Rückschlagventil (17A, 17B) aufweisend:
eine Ventilkomponente (17), die aus einem elastischen Material gebildet ist und eine ebene kreisförmige Dichtung (171) sowie einen Schaft (172) aufweist, der sich vom Zentrum der Dichtung (171) weg erstreckt; und
eine Trennwand (16) mit einer die Ventilkomponente (17) halternden Ventilabstützöffnung (164), mit einem dünnen kreisförmigen Bereich (162), der mit der Ventilabstützöffnung (164) zentriert ist und einen kleineren Durchmesser aufweist als die Dichtung (171), und mit Ventilationsöffnungen (165) durch den dünnen kreisförmigen Bereich (162) hindurch,
wobei der Schaft (172) der Ventilkomponente (17) von der Ventilabstützöffnung (164) in der Trennwand (16) aufgenommen ist; und
wobei die Dichtung (171) derart in Richtung auf die Trennwand (16) verformt ist, dass die Bodenfläche der Dichtung (171) zumindest in einem Zustand, in dem die Ventilkomponente (17) nicht mit Fluiddruck beaufschlagt wird, in linienförmigen Kontakt mit einer kreisförmigen Kante (163) steht, die durch den Höhenunterschied zwischen der Trennwand (16) und dem dünnen kreisförmigen Bereich (162) gebildet ist, und
wobei die Dichtung (171) der Ventilkomponente (17) bei nicht an der Trennwand (16) angebrachter Ventilkomponente (17) planar ist,
**dadurch gekennzeichnet, dass** der Rand der Bodenfläche der Dichtung (171) ringförmig abgeschrägt ist und die Dicke der Dichtung (171) in Richtung auf den äußeren Rand reduziert ist, und dass eine ringförmig abgeschrägte Fläche (175) in linienförmigen Kontakt mit der kreisförmigen Kante (163) steht.

2. Rückschlagventil (17A, 17B) nach Anspruch 1,
wobei die Dichtung (171) der Ventilkomponente (17) bei nicht an der Trennwand (16) angebrachter Ventilkomponente (17) planar ist; und
wobei die Bodenfläche der Dichtung (171) an der Grenze zwischen dem Schaft (172) und der Dichtung (171) mit dem dünnen kreisförmigen Bereich (163) in Kontakt steht.

3. Pumpe mit einem Rückschlagventil gemäß Anspruch 1 oder 2.

## Revendications

1. Clapet antiretour (17A, 17B) comprenant :
un organe de clapet (17) constitué d'un matériau élastique et comportant un obturateur circulaire plat (171) et un axe (172) s'étendant depuis le centre de l'obturateur (171) ; et
une cloison (16) comportant un trou de support de clapet (164) qui soutient l'organe de clapet (17), une partie circulaire mince (162) centrée sur le trou de support de clapet (164) et ayant un diamètre inférieur à l'obturateur (171), et des évents (165) traversant la partie circulaire mince (162), dans lequel
l'axe (172) de l'organe de clapet (17) est soutenu par le trou de support de clapet (164) pratiqué dans la cloison (16) ; et
l'obturateur (171) est déformé vers la cloison (16) de telle manière que la surface inférieure de l'obturateur (171) est en contact linéaire avec un bord circulaire (163) qui est défini par la différence de niveau entre la cloison (16) et la partie circulaire mince (162) au moins dans un état où l'organe de clapet (17) ne subit pas de pression d'un fluide, dans lequel l'obturateur (171) de l'organe de clapet (17) est plat lorsque l'organe de clapet (17) n'est pas fixé à la cloison (16) ; **caractérisé en ce que** le rebord de la surface inférieure de l'obturateur (171) est conique de façon annulaire et l'épaisseur de l'obturateur (171) est réduite vers le rebord extérieur, et **en ce qu'**une surface conique de façon annulaire (175) est en contact linéaire avec le bord circulaire (163).

2. Clapet antiretour (17A, 17B) selon la revendication 1, dans lequel:
l'obturateur (171) de l'organe de clapet (17) est plat lorsque l'organe de clapet (17) n'est pas fixé à la cloison (16) ; et
la surface inférieure de l'obturateur (171) est en contact avec la partie circulaire mince (163) à la frontière entre l'axe (172) et l'obturateur (171).

3. Pompe comprenant le clapet antiretour (17A, 17B) selon la revendication 1 ou 2.
